# EUROPÄISCHE PATENTSCHRIFT

(11) **EP 1 601 946 B1**
(45) Veröffentlichungstag und Bekanntmachung des Hinweises auf die Patenterteilung: **26.09.2007**
(21) Anmeldenummer: 03782394.5
(22) Anmeldetag: 13.12.2003
(51) Int. Cl.: G01M 3/28, G01N 15/08

(54) **VORRICHTUNG UND VERFAHREN ZUR MESSUNG DES LVERLUSTS ODER DE R LECKRATE AN DICHTUNGEN**
DEVICE AND METHOD FOR MEASURING OIL LOSS OR LEAKAGE ON SEALS
DISPOSITIF ET PROCEDE DE MESURE DES PERTES D'HUILE OU DU DEBIT DE FUITE SUR DES JOINTS

(30) Priorität: 07.03.2003 DE 10310380
(43) Veröffentlichungstag der Anmeldung: 07.12.2005
(73) Patentinhaber: Carl Freudenberg KG, 69469 Weinheim (DE)
(72) Erfinder: ARORA, Michael, I-10060 Roletto (IT); QUAGLIA, Giuseppe, I-10060 Piscina (IT); IVANOV, Alexandre, I-10137 Torino (IT)
(86) Internationale Anmeldenummer: PCT/EP2003/014207
(87) Internationale Veröffentlichungsnummer: WO 2004/079322

(56) Entgegenhaltungen:
- DD-A- 286 047
- FR-A- 2 636 138

## Beschreibung

### Technisches Gebiet

Bei radialen oder auch axialen Dichtungen an Wellen oder Schäften ist es häufig wünschenswert, dass eine geringe Menge an Öl durch die Dichtung hindurch gelangt damit die Dichtung nicht trocken läuft und dann versagt, insbesondere bei Ventilschaftdichtungen ist eine bestimmte Leckrate sehr zweckmäßig. Diese Leckrate soll jedoch nicht so hoch sein, da dieses wiederum zu Beschädigungen am Verbrennungsmotor führen kann. Es ist deshalb sehr wünschenswert vor allen Dingen bei neueren Konstruktionen, die Leckrate einer Dichtung exakt bestimmen zu können. Diese Leckrate soll stabil sein und gering über die gesamte Lebensdauer der Dichtung. Ein Minimum an möglichen Ölverlusten soll erreicht werden.

Bei der Entwicklung von neuen Ventilschaftdichtungen ist es sehr schwer, die Leckrate zu messen im Hinblick auf die äußerst geringe Menge an Ölverlust, diese liegt unter 0,01 cm³/10h.

### Stand der Technik

Um die Leckrate in Versuchen zu messen, sind Messvorrichtungen bekannt geworden bei denen das abtropfende Öl aufgefangen wurde und in vorgegebenen Abständen gewogen wurde. Dieses Verfahren ist jedoch bei den geringen Mengen an Verlustöl wie sie gewünscht werden in vielen Fällen nicht anwendbar. Es ist auch nicht möglich die Verlustölrate zu messen ohne die Messvorrichtung abzuschalten.

EP 1 217 352 zeigt eine Vorrichtung zur Ermittlung von Leckagen an der Dichtung eines Ventils, bei der der Druck in einem Kontrollvolumen zwischen einer ersten und einer zweiten Ventilschaftdichtung kontinuierlich ermittelt und daraus der Leckagestrom berechnet wird.

### Darstellung der Erfindung

Der Erfindung liegt die Aufgabe zu Grunde, eine Vorrichtung und ein Verfahren zur Messung des Ölverlustes oder der Leckrateandichtungen insbesondere an Ventilschaftdichtungen anzugeben, mit dem auch geringste Ölverluste beziehungsweise Leckraten sicher ermittelt werden können und damit die Qualität der Dichtung beurteilt werden kann. Darüberhinaus ist es wichtig, die Verlustratenwerte auf kontinuierlichem Wege zu erhalten, ohne die Leckagesammlung zu unterbrechen. Die Vorrichtung beziehungsweise das Verfahren sollen einfach im Aufbau und leicht durchführbar sein, schließlich sollen sie sehr exakte Ergebnisse liefern.

Die Lösung der gestellten Aufgabe wird mit den Merkmalen des Anspruchs 1 beziehungsweise des Anspruchs 7 erreicht. Die abhängiger Ansprüche 2 bis 6 stellen vorteilhafte Weiterbildungen des Erfindungsgedankens dar.

Gemäß der Erfindung wird die zur Messung vorgesehene Dichtung in einen Halter aufgenommen der in seinem Aufbau den Vorort am Motor vorhandenen Gegebenheiten entspricht. Die Dichtung wird somit mitsamt der Welle und den sie umgebenden Gehäuseteil in der Halterung montiert. Unterhalb der Halterung wird eine Kammer angeordnet, die über einen Durchlass direkt mit dem äußeren Raum der Dichtung kommuniziert. Senkrecht zum Durchlass ausgerichtet ist in der Kammer ein Kollektor angeordnet auf den das Lecköl geleitet wird. Durch die Kammer wird vorgegebene Druckluft geleitet, welche oberhalb des Kollektors in die Kammer eingeführt wird und unterhalb des Kollektors aus der Kammer abgezogen wird. Über eine Druckmesseinrichtung wird die Druckdifferenz der Druckluft vor und nach dem Kollektor gemessen, diese Druckluftdifferenz stellt eine Aussage zur Leckrate dar. Je höher die Druckdifferenz, um so höher die Leckrate. Bei entsprechend geeichten Geräten kann anhand der ermittelten Kurve der Druckdifferenz Rückschlüsse auf die Leckrate gezogen werden beziehungsweise die Leckrate direkt abgelesen werden.

Der in der Vorrichtung verwendete Kollektor wird vorzugsweise aus einem Vliesstoff gebildet. Es versteht sich, dass für jede neue Messung ein neuer Kollektor einzusetzen ist. Dabei ist es grünstig, wenn bei unterschiedlichen Kollektoreigenschaften eine Kalibrierung der Vorrichtung erfolgt.

In die Druckluftzufuhr zur Kammer ist ein Druckmesser eingesetzt, welcher die Druckdifferenz am Kollektor misst. Darüber hinaus ist die Druckluftzufuhr mit einem Druckregler, einem Mengenregler und einem Widerstand zur Regulierung der konstanten Flussrate versehen.

Das Messverfahren wird so durchgeführt, dass während des Messvorgangs Druckluft mit konstanter Menge durch die Kammer und damit durch den Kollektor geleitet wird. Sodann wird die am Kollektor durch den Zufluss an Lecköl sich einstellende Druckdifferenz gemessen. Diese Druckdifferenz kann an einem entsprechenden Gerät angezeigt und direkt abgelesen werden. Es ist aber auch möglich, die Druckdifferenz über die Zeit gesehen in einem Diagramm aufzuzeichnen und aus dem Diagramm die Leckölrate abzulesen.

### Kurzbeschreibung der Zeichnung

Anhand eines in der Zeichnung dargestellten Ausführungsbeispiels wird die Erfindung nachstehend näher erläutert.

### Es zeigt:

- Figur 1: schematisch die Anordnung der Messvorrichtung,
- Figur 2: ein Schema des pneumatischen Kreislaufs und
- Figur 3: ein Diagramm bei dem die Druckdifferenz am Kollektor über der Leckrate für verschiedene Dichtungen aufgetragen ist.

### Ausführung der Erfindung

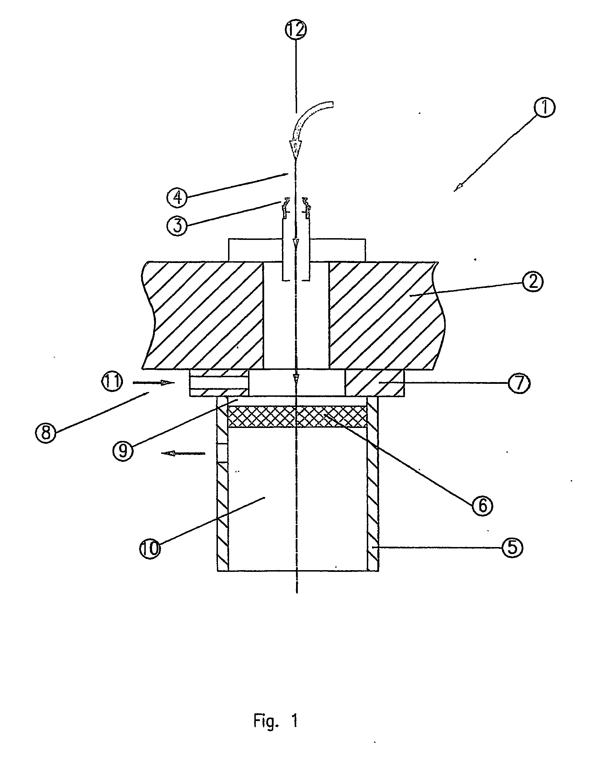

In der Figur 1 ist eine Vorrichtung zur Messung der Leckrate an einer Ventilschaftdichtung schematisch dargestellt. Diese Vorrichtung 1 besteht im Wesentlichen aus einer Halterung 2, in welche eine Ventilschaftdichtung 3 eingesetzt ist. Die Ventilschaftdichtung 3 kann von unterschiedlicher Bauart sein und ist deshalb nicht im Detail gezeichnet. Sie umfasst den in axialer Richtung hin und her bewegten Ventilschaft 4. Die Ventilschaftdichtung 3 ist in Richtung auf den Schaft 4 als dynamische Dichtung anzusehen. Die Leckrate dieser dynamischen Dichtung ist zu messen. Die vorgenannten Teile werden an der Halterung 2 befestigt. Unterhalb der Halterung 2 befindet sich die Kammer 5, In der Kammer 5 ist der Kollektor 6 angeordnet, auf den das Lecköl tropft. Im Deckel 7 der Kammer 5 ist eine Druckluftzufuhr 8 untergebracht. Die zugeführte Druckluft verteilt sich unter dem Deckel 7 und gelangt von dort in den Innenraum 9 der Kammer 5. Dieser Innenraum 9 liegt direkt über dem Kollektor 6, so dass die Luft durch den Kollektor 6 hindurchdringt um in den unteren Teil 10 der Kammer 5 zu gelangen, von wo aus die Luft nach außen geleitet wird. Der Luftstrom ist durch die Pfeile 11 angedeutet. Über eine nicht näher dargestellte Vorrichtung 12 wird der Ventilschaft 4 unter Bedingungen die vergleichbar mit den Einsatzbedingungen sind hin und her bewegt. Das nach unten abtropfende Lecköl wird auf dem Kollektor 6 gesammelt und die am Kollektor 6 gemessene Druckdifferenz gibt ein Maß für die Leckölrate. In der Kammer 5 sind in Luftstromrichtung gesehen, vor dem Kollektir 6 und nach dem Kollektor 6 entsprechende Drucksensoren untergebracht. Die Kammer 5 ist in ihrem Innenraum zylindrisch ausgebildet und der Kollektor 6 als ein Flachfilter ausgestaltet. Dabei wird bevorzugt ein Vliesstoff für den Kollektor verwendet.

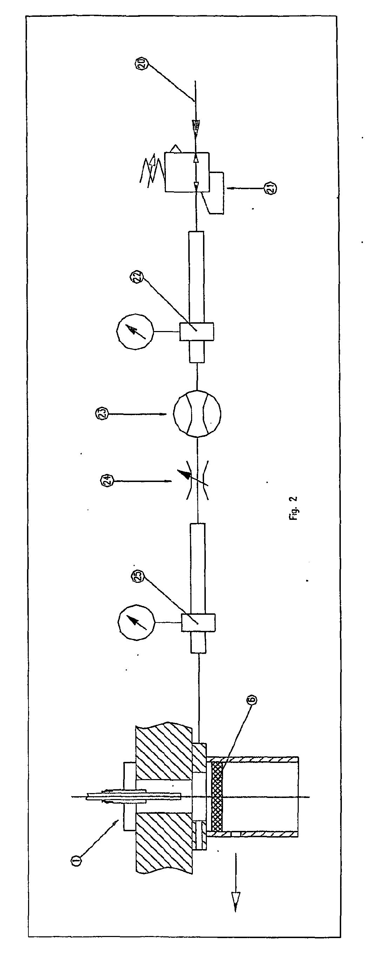

In der Figur 2 ist die Vorrichtung 1 mit den zur Durchführung der Messung erforderlichen Nebenaggregaten gezeigt, dabei ist die Vorrichtung 1 nur schematisch angedeutet. Über die Leitung 20 wird Druckluft zugeführt. Diese Druckluft wird über das Druckreduzierventil 21 und das Druckmessgerät 22 auf einen konstanten Druck eingeregelt. Über den Flussmesser 23 wird die Druckluftmenge gemessen. Mit dem Wiederstand 24 ist eine Regulierung des erforderlichen konstanten Werts der Flussrate möglich. Über den Druckmesser 25 wird die am Kollektor 6 sich einstellende Druckdifferenz Δ P gemessen.

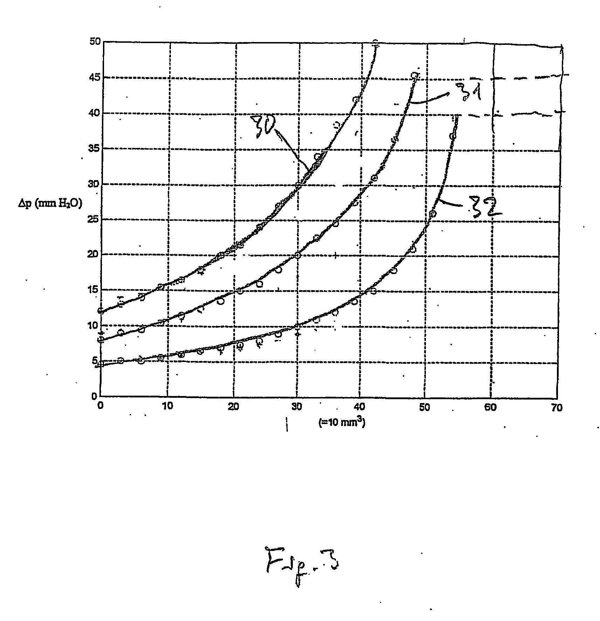

In der Figur 3 sind die erzielten Messergebnisse eingetragen und zwar für drei verschiedene Dichtungen 30, 31 und 32. Die gemessene Druckdifferenz Δ P in mm H₂O lässt eine direkte Aussage der entstandenen Leckrate gemessen in 10 mm³ zu. Die Wechselbeziehung zwischen der Druckdifferenz und der Qualität der Ölleckage am Kollektor ist abhängig von den Charakteristika des Kollektors.

## Patentansprüche

1. Vorrichtung zur Messung des Ölverlustes oder der Leckrate an Dichtungen, insbesondere an Ventilschaftdichtungen, mit ein Halterung (2) zur Aufnahme der zur Messung vorgesehenen Dichtung (3) **gekennzeichnet durch** eine unterhalb der Halterung (2) angeordnete mit Druckluft beaufschlagbare Kammer (5) zur Aufnahme eines Kollektors (6) sowie einer Einrichtung (24) zur Erzeugung eines konstanten Luftflusses und eine Druckmesseinrichtung (25) zur Messung der Druckdifferenz (Δ P) des Druckluftdrucks vor und nach dem Kollektor (6) von der **durch** die Kammer (5) geführten Druckluft.

2. Vorrichtung nach Anspruch 1, **dadurch gekennzeichnet, dass** der Kollektor (6) aus einem Vliesstoff gebildet ist.

3. Vorrichtung nach einem der Ansprüche 1 oder 2, **dadurch gekennzeichnet**, das der Kollektor (6) ein scheibenförmiger Flachkollektor ist.

4. Vorrichtung nach einem der Ansprüche 1 bis 3, **dadurch gekennzeichnet, dass** in die Druckluftzufuhr (8) ein Differenzdruckmesser (25) eingesetzt ist, der die Druckdifferenz (Δ P) am Kollektor (6) misst.

5. Vorrichtung nach einem der Ansprüche 1 bis 4, **dadurch gekennzeichnet, dass** die Druckluftzufuhr (8) mit einem Druckregler (21, 22, 23), einem Durchflussmesser (23) und einem Widerstand (24) zur Regulierung der konstanten Flussrate versehen ist.

6. Verfahren zur Messung des Ölverlustes oder der Leckrate an Dichtungen, insbesondere an Ventilschaftdichtungen mit einer Vorrichtung nach den Ansprüchen 1 bis 5, **dadurch gekennzeichnet, dass** während des Messvorgangs Druckluft mit konstanter Menge durch die Kammer (5) geleitet wird und die am Kollektor (6) durch den Zufluss an Öl aus der Leckrate der Dichtung (3) sich einstellende Druckdifferenz (Δ P) gemessen wird.

## Claims

1. Device for measuring the oil loss or the leakage rate at seals, in particular at valve shank seals, having a retainer (2) for holding the seal (3) provided for measurement, **characterized by** a chamber (5), which is arranged below the retainer (2) and can be acted on with compressed air, for holding a collector (6) and a device (24) for generating a constant air flow, and by a pressure measuring device (25) for measuring the pressure difference (Δ P) of the compressed air pressure, upstream and downstream of the collector (6), of the compressed air guided through the chamber (5).

2. Device according to Claim 1, **characterized in that** the collector (6) is formed from a nonwoven fabric.

3. Device according to one of Claims 1 or 2, **characterized in that** the collector (6) is a plate-shaped flat collector.

4. Device according to one of Claims 1 to 3, **characterized in that** a differential pressure sensor (25) is inserted into the compressed air supply (8), which differential pressure sensor (25) measures the pressure difference (Δ P) at the collector (6).

5. Device according to one of Claims 1 to 4, **characterized in that** the compressed air supply (8) is provided with a pressure regulator (21, 22, 23), a throughflow meter (23) and a resistance (24) for regulating the constant flow rate.

6. Method for measuring the oil loss or the leakage rate at seals, in particular at valve shank seals with a device according to Claims 1 to 5, **characterized in that**, during the measurement process, compressed air with a constant quantity is conducted through the chamber (5), and the pressure difference (Δ P) generated at the collector (6) as a result of the inflow of oil from the leakage rate of the seal (3) is measured.

## Revendications

1. Dispositif de mesure des pertes d'huile ou du débit de fuite sur des joints, en particulier des joints de tiges de soupape, comportant un support (2) destiné à recevoir le joint (3) prévu pour la mesure, **caractérisé par** une chambre (5) pouvant être alimentée en air comprimé disposée en dessous du support (2), destinée à recevoir un collecteur (6) ainsi qu'un dispositif (24) pour produire un flux d'air constant, et par un dispositif de mesure de la pression (25) pour mesurer la différence de pression (ΔP) de la pression de l'air comprimé avant et après le collecteur (6) de l'air comprimé conduit à travers la chambre (5).

2. Dispositif selon la revendication 1, **caractérisé en ce que** le collecteur (6) est formé par une nappe de fibres.

3. Dispositif selon l'une des revendications 1 ou 2, **caractérisé en ce que** le collecteur (6) est un collecteur plat en forme de disque.

4. Dispositif selon l'une quelconque des revendications 1 à 3, **caractérisé en ce que** l'on place dans l'arrivée d'air comprimé (8) un dispositif de mesure de différence de pression (25), qui mesure la différence de pression (ΔP) sur le collecteur (6).

5. Dispositif selon l'une quelconque des revendications 1 à 4, **caractérisé en ce que** l'arrivée d'air comprimé (8) est pourvue d'un régulateur de pression (21, 22, 23), d'un dispositif de mesure du débit (23) et d'une résistance (24) pour la régulation du débit constant.

6. Procédé de mesure des pertes d'huile ou du débit de fuite sur des joints, en particulier des joints de tiges de soupape, avec un dispositif selon les revendications 1 à 5, **caractérisé en ce que**, pendant l'opération de mesure, de l'air comprimé est conduit à travers la chambre (5) avec un débit constant et on mesure la différence de pression (ΔP) qui s'établit sur le collecteur (6) par l'arrivée d'huile à partir du débit de fuite du joint (3).
